(19) Europäisches Patentamt
European Patent Office
Office européen des brevets

(11) **EP 4 535 445 A1**

(12) **EUROPEAN PATENT APPLICATION**
published in accordance with Art. 153(4) EPC

(43) Date of publication:
**09.04.2025   Bulletin 2025/15**

(21) Application number: **22949775.5**

(22) Date of filing: **06.07.2022**

(51) International Patent Classification (IPC):
***H01M 4/13*** (2010.01)

(52) Cooperative Patent Classification (CPC):
**H01M 4/13;** Y02E 60/10

(86) International application number:
**PCT/CN2022/104074**

(87) International publication number:
**WO 2024/007187 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **LANG, Ye
Ningde, Fujian 352100 (CN)**
• **PENG, Gang
Ningde, Fujian 352100 (CN)**
• **XU, Leimin
Ningde, Fujian 352100 (CN)**

(74) Representative: **Icosa
83 avenue Denfert-Rochereau
75014 Paris (FR)**

(54) **ELECTROCHEMICAL DEVICE AND ELECTRONIC DEVICE**

(57)    This application discloses an electrochemical device including a positive electrode. The positive electrode includes a positive electrode current collector and a positive electrode active material layer disposed on a surface of the positive electrode current collector. The positive electrode active material layer includes a base portion and a protruding portion on a surface of the base portion away from the current collector, where a thickness of the base portion is d microns, and a height of the protruding portion is a microns. The positive electrode active material layer includes a positive electrode active material, and the positive electrode active material includes a lithium-nickel composite oxide, where a molar proportion of element nickel in the lithium-nickel composite oxide in metal elements other than lithium in the lithium-nickel composite oxide is X, satisfying: $0.2d \times x \leq a \leq 1.15d \times x$.

FIG. 2

**Description**

**TECHNICAL FIELD**

The application relates to the technical field of batteries, and in particular, to an electrochemical device and an electronic device.

**BACKGROUND**

Lithium-ion batteries are widely used in portable electronic devices, electric tools, electric energy storage, and electric vehicles due to their high energy density, high working voltage, low self-discharge rate, small size, light weight, and the like. In recent years, with the rapid development of electric tools, electric vehicles and drones, higher requirements have been put forward for the power density, energy density, low-temperature performance and high-temperature cycle life of lithium-ion batteries. How the improvement of power density and the improvement of energy density and high-temperature cycle life are balanced is one of key technical problems to be solved.

**SUMMARY**

In view of this, this application provides an electrochemical device and an electronic device to at least partially solve the foregoing problems existing in the prior art.

In one aspect, this application provides an electrochemical device including a positive electrode, where the positive electrode includes a positive electrode current collector and a positive electrode active material layer disposed on a surface of the positive electrode current collector, where the positive electrode active material layer includes a base portion and a protruding portion on a surface of the base portion away from the current collector, where a thickness of the base portion is d microns, and a height of the protruding portion is a microns; and the positive electrode active material layer includes a positive electrode active material, and the positive electrode active material includes a lithium-nickel composite oxide, where a molar proportion of element nickel in the lithium-nickel composite oxide in metal elements other than lithium in the lithium-nickel composite oxide is x, satisfying: $0.2d \times x \leq a \leq 1.15d \times x$. With the protruding portion constructed on the base portion of the positive electrode active material layer, a gap can be reserved for the swelling of the electrode plate, providing a stress release space, and further the foregoing relation is satisfied, so that the prepared electrochemical device can not only support high-rate discharge, but also have longer high-temperature cycle life and safety performance across the lifespan.

In some embodiments, the positive electrode active material layer has N protruding portions per square centimeter, where N is 1 to 25. In some embodiments, N is 4 to 25. With the number N of protruding portions set within the foregoing range, the protruding portions can provide sufficient support, reserving enough space for swelling, and further improving the high-temperature cycle life of the electrochemical device, without adding to the complication and complexity of processing technology.

In some embodiments, the electrochemical device satisfies at least one of the following conditions: (1) $5 \leq a \leq 70$; (2) $30 \leq d \leq 100$; (3) $0.4 \leq x \leq 0.95$; or (4) $a \leq 0.95 d$.

In some embodiments, $5 \leq a \leq 40$. In some embodiments, $0.15d \leq a \leq 0.55d$.

In some embodiments, the positive electrode active material includes first primary particles and secondary particles formed by aggregation of second primary particles, where a molar proportion of element nickel in the first primary particles in metal elements other than lithium in the first primary particles is x1, and a molar proportion of element nickel in the secondary particles in metal elements other than lithium in the secondary particles is x2, satisfying: $0.02 \leq x1 - x2 \leq 0.35$. With the first primary particles blended in and the Ni content of the secondary particles appropriately reduced, fragmentation of the secondary particles is effectively suppressed. In addition, the Ni content of the first primary particles is increased, thereby balancing the deintercalation speed and distribution of Li ions, further alleviating swelling of the electrode plate and improving the high-temperature cycle life of the electrochemical device.

In some embodiments, the electrochemical device satisfies at least one of the following conditions: (a) an average particle size of the first primary particles is 1 micron to 6 microns; (b) an average particle size of the second primary particles is 100 nanometers to 2 microns; or (c) an average particle size of the secondary particles is 8 microns to 15 microns.

In some embodiments, the electrochemical device satisfies at least one of the following conditions: (1) the lithium-nickel composite oxide further includes element Co, and a molar proportion of element Co in the lithium-nickel composite oxide in metal elements other than lithium in the lithium-nickel composite oxide is y, where $0.01 \leq y \leq 0.5$; (2) the lithium-nickel composite oxide further includes element Mn, and a molar proportion of element Mn in the lithium-nickel composite oxide in metal elements other than lithium in the lithium-nickel composite oxide is z, where $0.01 \leq z \leq 0.5$; or (3) the lithium-nickel composite oxide further includes element M, where element M includes at least one of Al, Nb, Mg, Ti, W, Ga, Zr, W, Y, V, Sr, Mo, Ru, Ag, Sn, Au, La, Ce, Pr, Nd, Sm, or Gd, and a molar proportion of element M in the lithium-nickel composite oxide in metal elements other than lithium in the lithium-nickel composite oxide is a1, where $0.1\% \leq a1 \leq 2\%$.

In some embodiments, the lithium-nickel composite oxide includes $Li_mNi_xCo_yMn_zM_{a1}O_{2\pm q}T_q$, where M includes Al, Nb, Mg, Ti, W, Ga, Zr, W, Y, V, Sr, Mo, Ru, Ag, Sn, Au, La, Ce, Pr, Nd, Sm, or Gd, and T includes at least one of F, Cl, Br, I, N or S, where $0.2 \leq m \leq 1.2$, $0.4 \leq x \leq 0.95$, $0 \leq y \leq 0.5$, $0 \leq z \leq 0.5$, $0 \leq a1 \leq 0.02$, and $0 \leq q \leq 0.2$. In some embodiments, $0.6 \leq m \leq 1.2$, $0.4 \leq x \leq 0.95$, $0.01 \leq y \leq 0.5$, $0.01 \leq z \leq 0.5$, $0.001 \leq a1 \leq 0.02$, and $0 \leq q \leq 0.2$.

In some embodiments, the positive electrode active material layer includes a first layer and a second layer, where the first layer is located between the positive electrode current collector and the second layer, where based on a mass of the first layer, a mass percentage of a binder in the first layer is b1, and based on a mass of the second active layer, a mass percentage of a binder in the second layer is b2, satisfying: $b2 1 b1 \geq 1.2$. As the lithium-nickel composite oxide swells and shrinks, the second layer away from the current collector experiences a relatively large strain. More binder contained in the second layer away from the current collector helps to suppress the thickness change of the electrode plate, thereby improving the high-temperature cycle life of the electrochemical device.

According to another aspect of the application, the application provides an electronic device including the electrochemical device according to any one of the foregoing embodiments.

## BRIEF DESCRIPTION OF DRAWINGS

FIG. 1A is a photograph of a positive electrode plate according to example 2 of this application.
FIG. 1B is a partial enlarged view of FIG. 1A.
FIG. 2 is a schematic diagram of a positive electrode plate according to an embodiment of this application.

## DESCRIPTION OF EMBODIMENTS

The following describes this application in detail. It should be understood that terms used in this specification and the appended claims should not be interpreted as being limited to their general and dictionary meanings, but should be interpreted based on the meanings and concepts corresponding to the technical aspects of this application on the basis of the principle that the inventor is allowed to define the terms appropriately for best interpretation. Therefore, descriptions shown in some embodiments described in the specification is only a concrete example for illustrative purposes, and are not intended to show all technical aspects of this application. It should be understood that various alternative equivalents and variations may be completed during filing of this application.

In the specific embodiments and claims, an item list preceded by the terms "at least one of", "at least one piece of", "at least one type of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or multiple elements. The item B may include a single element or multiple elements. The item C may include a single element or multiple elements.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

## I. Electrochemical device

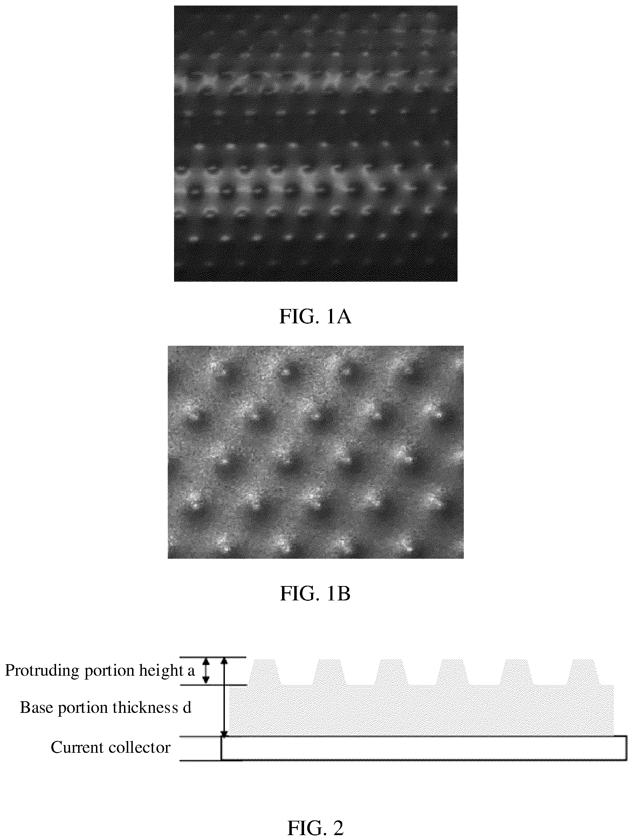

This application provides an electrochemical device including a positive electrode, where the positive electrode includes a positive electrode current collector and a positive electrode active material layer disposed on a surface of the positive electrode current collector, where the positive electrode active material layer includes a base portion and a protruding portion on a surface of the base portion away from the current collector, where a thickness of the base portion is d microns, and a height of the protruding portion is a microns; and the positive electrode active material layer includes a positive electrode active material, and the positive electrode active material includes a lithium-nickel composite oxide, where a molar proportion of element nickel in the lithium-nickel composite oxide in metal elements other than lithium in the lithium-nickel composite oxide is x, satisfying: $0.2d \times x \leq a \leq 1.15d \times x$. FIG. 1A and FIG. 1B are photos of a positive electrode plate according to example 2 of this application, showing that a surface of the base portion in the positive electrode active material layer is provided with protruding portions. Referring to FIG. 2, FIG. 2 shows a base portion located on the current collector and a protruding portion arranged on a surface of the base portion away from the current collector, where the height of the protruding portion is a microns and the thickness of the base portion is d microns.

For this application, it is found after research that the C-axis of the lithium-nickel composite oxides swells first and then shrinks during a charging and discharging process, and a higher content of nickel in the lithium-nickel composite oxide leads to greater swelling and shrinkage of the C-axis in the charging and discharging process, causing the positive electrode plate to first swell and then shrink, and presenting a different interface stress change with the negative electrode plate. This change causes irregular interface changing between the winding layers in wound-structure battery cells. Such irregular interface changing is more obvious in non-planar zones (for example, winding corners). The resulting uneven interfacial tension leads to wavy deformation in the battery cell, affecting its appearance, safety, and customer use. This application employs the foregoing design, that is, protruding portions being constructed on the base portion of the positive electrode active material layer, allowing for reservation of a gap for the swelling of the electrode plate, providing a stress release space, thereby alleviating this issue. According to research, when in the positive electrode plate, the height a microns of the protruding portion, the thickness d microns of the base portion, and the molar proportion x of element nickel in the lithium-nickel composite oxide in metal elements other than lithium in the lithium-nickel composite oxide, satisfy the relation of $0.2d \times x \leq a \leq 1.15d \times x$, a lithium-ion battery prepared can not only support high-rate discharge, but also have a longer high-temperature cycle life and safety performance across the lifespan, thereby meeting the needs for use of terminals in harsh scenarios.

In some embodiments, the positive electrode active material layer has N protruding portions per square centimeter, where N is 1 to 25. In some embodiments, N is 2, 3, 4, 5, 6, 7, 8, 9, 10, 11, 12, 13, 14, 15, 16, 17, 18, 19, 20, 21, 22, 23, or 24, or a range defined by any two of these values.

In some embodiments, N is 4 to 25. An overlarge number of protruding portions per unit area is detrimental to processing, and a too small number of protruding portions per unit area provide limited support and reserve a small space for swelling, and therefore lead to limited improvement for the battery cell swelling issue. With the number N of protruding portions set within the foregoing range, the protruding portions can provide sufficient support, reserving enough space for swelling, and further improving the high-temperature cycle life of the electrochemical device, without adding to the complication and complexity of processing technology.

In some embodiments, the electrochemical device satisfies at least one of the following conditions: (1) $5 \leq a \leq 70$; (2) $30 \leq d \leq 100$; (3) $0.4 \leq x \leq 0.95$; or (4) $a \leq 0.95 d$. In some embodiments, a is 10, 15, 20, 25, 30, 40, 45, 50, 55, 60, or 65, or a range defined by any two of these values. In some embodiments, $5 \leq a \leq 40$. In some embodiments, d is 35, 40, 45, 50, 55, 60, 65, 70, 75, 80, 85, 90, or 95, or a range defined by any two of these values. In some embodiments, x is 0.5, 0.6, 0.7, 0.8, or 0.9, or a range defined by any two of these values.

In some embodiments, $0.15d \leq a \leq 0.55d$. Constructing protruding portions on the base portion of the positive electrode active material layer can reserve a gap for the swelling of the electrode plate and provide a stress release space. However, the height of the protruding portion being excessively high (for example, a > 0.55d) would reduce the energy density of the electrochemical device, increase the impedance of the electrochemical device, and degrades the rate performance of the electrochemical device. The height of the protruding portion being excessively low (for example, a < 0.15d) would lead to a limited space reserved for swelling of the positive electrode plate, reducing the high-temperature cycle life of the electrochemical device. Adjusting the height a of the protruding portion to the foregoing range can improve the energy density of the electrochemical device while allowing for high-rate discharge, longer high-temperature cycle life, and safety performance across the lifespan.

In some embodiments, the positive electrode active material includes first primary particles and secondary particles formed by aggregation of second primary particles, where a molar proportion of element nickel in the first primary particles in metal elements other than lithium in the first primary particles is x1, and a molar proportion of element nickel in the secondary particles in metal elements other than lithium in the secondary particles is x2, satisfying: $0.02 \leq x1 - x2 \leq 0.35$.

In some embodiments, the electrochemical device satisfies at least one of the following conditions: (a) an average particle size of the first primary particles is 1 micron to 6 microns; (b) an average particle size of the second primary particles is 100 nanometers to 2 microns; or (c) an average particle size of the secondary particles is 8 microns to 15 microns.

A higher Ni content leads to more Li ions deintercalated under the same voltage and more obvious change of the C-axis. For example, extreme shrinkage value of the C-axis is above 5% when the Ni content is greater than 0.8, and is reduced to 3% when the Ni content is less than or equal to 0.6. In addition, blending with a lithium-nickel composite oxide of primary particle morphology can effectively prevent particle fragmentation. Therefore, in this application, with the first primary particles blended in and the Ni content of the secondary particles appropriately reduced, fragmentation of the secondary particles is effectively suppressed. In addition, the Ni content of the first primary particles is increased, thereby balancing the deintercalation speed and distribution of Li ions, further alleviating swelling of the electrode plate and improving the high-temperature cycle life of the electrochemical device.

In some embodiments, the lithium-nickel composite oxide further includes element Co, and a molar proportion of element Co in the lithium-nickel composite oxide in metal elements other than lithium in the lithium-nickel composite oxide is y, where $0.01 \leq y \leq 0.5$.

In some embodiments, the lithium-nickel composite oxide further includes element Mn, and a molar proportion of element Mn in the lithium-nickel composite oxide in metal elements other than lithium in the lithium-nickel composite oxide is z, where $0.01 \leq z \leq 0.5$.

In some embodiments, the lithium-nickel composite oxide further includes element M, where element M includes at least one of Al, Nb, Mg, Ti, W, Ga, Zr, W, Y, V, Sr, Mo, Ru, Ag, Sn, Au, La, Ce, Pr, Nd, Sm, or Gd, and a molar proportion of element M in the lithium-nickel composite oxide in metal elements other than lithium in the lithium-nickel composite oxide is a1, where $0.1\% \leq a1 \leq 2\%$. Lithium-nickel composite oxides demonstrate high temperature rise during a high-rate charge/discharge process. Doping with element M can improve the interface stability under high temperature and improve cycling performance. In another perspective, doping with element M can increase the interface impedance during fast charging, slowing down lithium precipitation at the negative electrode plane and corners, and improving safety performance at the final stage of the lifespan.

In some embodiments, the lithium-nickel composite oxide includes $Li_mNi_xCo_yMn_zM_{a1}O_{2\pm q}T_q$, where M includes Al, Nb, Mg, Ti, W, Ga, Zr, W, Y, V, Sr, Mo, Ru, Ag, Sn, Au, La, Ce, Pr, Nd, Sm, or Gd, and T includes at least one of F, Cl, Br, I, N or S, where $0.2 \leq m \leq 1.2$, $0.4 \leq x \leq 0.95$, $0 \leq y \leq 0.5$, $0 \leq z \leq 0.5$, $0 \leq a1 \leq 0.02$, and $0 \leq q \leq 0.2$. In some embodiments, $0.6 \leq m \leq 1.2$, $0.4 \leq x \leq 0.95$, $0.01 \leq y \leq 0.5$, $0.01 \leq z \leq 0.5$, $0.001 \leq a1 \leq 0.02$, and $0 \leq q \leq 0.2$.

In some embodiments, the positive electrode active material layer includes a first layer and a second layer, where the first layer is located between the positive electrode current collector and the second layer, where based on a mass of the first layer, a mass percentage of a binder in the first layer is b1, and based on a mass of the second layer, a mass percentage of a binder in the second layer is b1, satisfying: $b2\,1b1 \geq 1.2$. As the lithium-nickel composite oxide swells and shrinks, the second layer away from the current collector experiences a relatively large strain. More binder contained in the second layer away from the current collector helps to suppress the thickness change of the electrode plate, thereby improving the high-temperature cycle life of the electrochemical device.

According to another aspect of the application, the application relates to an electronic device including the electrochemical device according to any one of the foregoing embodiments.

## 2. Preparation method of the foregoing electrochemical device

The following describes in detail the preparation method of the electrochemical device in this application using a lithium-ion battery as an example.

Preparation of negative electrode: A negative electrode active material (at least one of a carbon material, a silicon material, or lithium titanate) and a negative electrode binder are dispersed in a solvent system in a specific mass ratio, fully stirred and mixed, and the resulting mixture is applied onto a negative electrode current collector, followed by drying and cold calendering, to obtain a negative electrode.

Preparation of positive electrode:

Step (1): A first precursor of a required average particle size and lithium hydroxide (LiOH) are prepared according to a specific stoichiometric ratio, and evenly mixed, performing first calcination at 600°C to 1000°C for 10 to 20 hours to obtain first primary particles.

Step (2): A second precursor of a required average particle size and lithium hydroxide are prepared according to a specific stoichiometric ratio, and evenly mixed, performing first calcination at 600°C to 1000°C for 10 to 20 hours to obtain secondary particles formed by second primary particles.

Step (3): The first primary particles and the secondary particles are evenly mixed according to a specific mass ratio to form a positive electrode active material.

Step (4): The positive electrode active material, a conductive agent, and a binder are fully stirred and mixed in a solvent system according to a specific weight ratio, and then applied onto a positive electrode current collector, with the coating weight controlled, followed by drying, to obtain a positive electrode plate for later use.

Step (5): A pressing roller with circular dots having a required protrusion height is used to cold calender the foregoing positive electrode plate, with diameter of the circle controlled to be within a range of 0.5 mm to 5 mm, and the longest intercept of other shapes controlled to be within this range. The cold-calendered positive electrode plate is slit and cut to obtain a positive electrode.

Based on needs, the foregoing steps (1) and/or (2) may further include a doping and/or coating step, and the foregoing step (4) may be controlled to form one or more positive electrode active material layers.

In some embodiments, the conductive agent provides a conductive path for the positive electrode active material, so as to improve conductivity of the positive electrode active material layer. The conductive agent may include at least one of acetylene black, Ketjen black, natural graphite, conductive carbon black, graphene, carbon nanotubes, carbon fiber, metal powder, or metal fibers (such as copper, nickel, aluminum, or silver), but examples of the conductive agent are not limited thereto. In some embodiments, the amount of the conductive agent can be appropriately adjusted. Based on a total quantity of 100 parts by weight of the positive electrode active material, the conductive agent, and the binder, the conductive agent amounts within a range of 1 part by weight to 30 parts by weight.

In some embodiments, the solvent includes but is not limited to, for example, N-methylpyrrolidone, acetone, or water. In some embodiments, the amount of solvent can be appropriately adjusted.

In some embodiments, the binder can assist in adhesion between the positive electrode active material and the conductive agent, or assist in adhesion between the positive electrode active material and the positive electrode current collector. Examples of the binder include but are not limited to polyvinylidene fluoride, polyvinylidene chloride, carboxymethylcellulose, polyvinyl acetate, polyvinylpyrrolidone, polypropylene, polyethylene, and various polymers. Based on a total quantity of 100 parts by weight of the positive electrode active material, the conductive agent, and the binder, the binder amounts within a range of 1 part by weight to 30 parts by weight.

In some embodiments, the positive electrode current collector has a thickness in a range of 3 microns to 20 microns, but this disclosure is not limited thereto. The positive electrode current collector is conductive and does not cause adverse chemical changes in a prepared battery. Examples of the positive electrode current collector include but are not limited to copper, stainless steel, aluminum, nickel, titanium, or alloys (such as copper-nickel alloy). In some embodiments, the surface of the positive electrode current collector may include small irregularities (such as surface roughness) to enhance adhesion of the surface of the positive electrode current collector to the positive electrode active material. In some embodiments, the current collector may be used in multiple forms, for example, membrane, sheet, foil, web, porous structure, or foam, but this disclosure is not limited thereto.

Separator: In some embodiments, polyethylene (PE) porous polymeric film is used as the separator. In some embodiments, material of the separator may include glass fiber, polyester, polyethylene, polypropylene, polytetrafluoroethylene, or a combination thereof. In some embodiments, the separator has pores with a diameter in a range of 0.01 micron to 1 micron, and a thickness in a range of 5 microns to 100 microns.

Electrolyte solution: In some embodiments, the electrolyte solution includes an organic solvent, a lithium salt, and an additive. In some embodiments, the organic solvent includes at least one of ethylene carbonate (EC), propylene carbonate (PC), diethyl carbonate (DEC), ethyl methyl carbonate (EMC), dimethyl carbonate (DMC), propyl propionate, or ethyl propionate.

In some embodiments, the lithium salt includes at least one of an organic lithium salt or an inorganic lithium salt. In some embodiments, the lithium salt includes at least one of lithium hexafluorophosphate (LiPF$_6$), lithium bistrifluoromethanesulfonimide LiN(CF$_3$SO$_2$)$_2$ (LiTFSI), lithium bis(fluorosulfonyl)imide Li(N(SO$_2$F)$_2$) (LiFSI), lithium bisoxalatoborate LiB(C$_2$O$_4$)$_2$ (LiBOB), or lithium difluorooxalate borate LiBF$_2$(C$_2$O$_4$) (LiDFOB).

In some embodiments, the lithium salt amounts to 5% to 30% based on a mass of the electrolyte solution. In some embodiments, the lithium salt amounts to 6% to 25% based on the mass of the electrolyte solution.

In some embodiments, the additive includes at least one of fluoroethylene carbonate, vinylene carbonate, vinyl ethylene carbonate, 1,3-propane sultone, vinyl sulfate, adiponitrile, succinonitrile, glutaronitrile, 1,3,6-hexanetrinitrile, 1,2,6-hexanetrinitrile, succinic anhydride, lithium difluorophosphate, or lithium tetrafluoroborate.

The positive electrode, the separator, and the negative electrode are stacked in order, with the separator placed between the positive and negative electrodes for separation, and the stack is wound to produce a jelly roll. The jelly roll obtained by winding is placed in an outer package, followed by electrolyte solution injection and sealing, and then processes including formation, degassing and trimming are carried out to produce a lithium-ion battery.

## III. Electronic device

The application provides an electronic device including the electrochemical device described above.

According to some embodiments of this application, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, or a large household battery.

## 4. Specific examples

The following further describes this application in detail with reference to examples. However, it should be understood that the following examples are only illustrative, and the examples of this application are not limited thereto.

Examples 1 to 30 and comparative examples 1 to 3

Example 1

Positive electrode:

Step (1): A precursor with an average particle size of 10.1 microns and lithium hydroxide were prepared according to a stoichiometric ratio of $LiNi_{0.82}Co_{0.12}Mn_{0.06}O_2$, and mixed well to obtain a mixture. A molar ratio of Li to other metals was controlled to be 1.04, and after drying, performing first calcination at 860°C for 16 h to obtain secondary particles (with an average particle size of 9.5 microns) formed by aggregation of primary particles (with an average particle size of 0.5 microns).

Step (2): The above positive electrode active material was mixed with conductive carbon black (Super-P), carbon nanotubes (CNT), and a binder (PVDF) in an NMP solvent system according to a weight ratio 97:1.3:0.2:1.5, fully stirred and mixed, and applied on a 10-micron aluminum foil, with coating weight controlled to be $15mg/cm^2$, followed by drying at 105°C, to obtain a primary positive electrode plate.

Step (3): A pressing roller with circular dots having a protrusion height of 20 microns was used to cold calender the foregoing primary positive electrode plate, with diameter of the circle controlled to be within a range of 0.5 mm to 5 mm, and the cold-calendered electrode plate was slit and cut to produce a desired positive electrode. In the positive electrode active material layer, the height a of the protruding portions was set to 20 microns, the thickness d of the base portion was set to 75 microns, and a gap b between the protruding portions was set to 10 millimeters.

Separator: PE porous polymer film was used as a separator.

Negative electrode: A negative electrode active material artificial graphite, a conductive agent acetylene black, a binder styrene butadiene rubber (SBR), and a thickener sodium carboxymethyl cellulose (CMC) were fully stirred and mixed in a deionized water solvent system according to a mass ratio of 95:2:2:1, and applied on a Cu foil, followed by drying and cold calendering, to produce a negative electrode.

Electrolyte solution: Ethylene carbonate (abbreviated as EC), diethyl carbonate (abbreviated as DEC), propylene carbonate (abbreviated as PC) were evenly mixed according to a weight ratio of 2:6:2 in an argon atmosphere glove box with a water content less than 10ppm. Then a fully dried lithium salt $LiPF_6$ was dissolved in the above solvent, the content of $LiPF_6$ is 12.5%. Then 1.5% 1,3-propane sultone, 3% fluoroethylene carbonate, and 2% adiponitrile were added. The substance contents were based on a total weight of the electrolyte solution.

Preparation of a lithium-ion battery: The positive electrode, the separator and the negative electrode were stacked in sequence, with the separator between the positive electrode and the negative electrode for separation. Then the stack was wound and placed in an outer packaging aluminum plastic film, followed by electrolyte solution injection and sealing. Then processes including formation, degassing, and trimming were carried out to obtain a lithium-ion battery.

For preparation methods of examples 2 to 22 and comparative examples 1 to 3, example 1 could be referenced, with differences in the parameters in Table 1. For example, the preparation method of examples 2 to 4 differed from that of example 1 only in the gap b of protruding portions and the number N of protruding portions per square centimeter of the positive electrode active material layer. For example, the gap b of protruding portions in example 2 was 5 microns and N was 9, and the gap b of protruding portions in example 3 was 3 microns and N was 16. This can be achieved by controlling the parameters of the pressing roller. For another example, the difference between the preparation methods of examples 5 to 9 and example 3 is in the composition/morphology of the lithium-nickel composite oxide, where different Ni contents could be realized by a stoichiometric ratio of raw materials.

Examples 15-16 and 18-19 differed from example 2 in that sizes of primary particles of the secondary particles and secondary particles of the positive electrode active material were adjusted. Examples 17 and 20-22 differed from example 2 in blending with primary particles, and a mass ratio of primary particles to secondary particles in the positive electrode active material was 1:1, where a preparation method of the primary particles was as follows: precursor and lithium hydroxide (LiOH) were prepared according to a stoichiometric ratio of the lithium-nickel composite oxide, and mixed evenly to obtain a mixture, after drying, performing first calcination at 800°C for 16 h to obtain the primary particles.

**Examples 23 to 27**

In examples 23 to 27, the positive electrode active material was doped. The following uses example 23 for illustrative description. Example 23 differed from example 2 in that in step (2), $Al_2O_3$ was added to the mixture according to a stoichiometric ratio of $LiNi_{0.82}Co_{0.115}Mn_{0.06}Al_{0.005}O_2$.

**Examples 28 to 30**

In examples 28 to 30, the binder in the positive electrode active material layer was studied. The following uses example 28 for illustrative description. Example 28 differed from example 2 in that step (2) was replaced by the following steps (2a) and (2b) so that b2/b1 = 1.2; and in examples 29-30, on the basis of example 28, the binder content in step (2b) was adjusted so that b21b1 was 1.2 and 2 respectively.

Step (2a): The positive electrode active material was mixed with the conductive carbon black (Super-P), carbon nanotubes (CNT), and a binder (PVDF) in an NMP solvent system according to a weight ratio of 97:1.3:0.2:1.5, fully stirred and mixed, and applied on a 10-micron aluminum foil, with the coating weight controlled to be 10 mg/cm$^2$, followed by drying at 105°C, to obtain a primary positive electrode plate for later use.

Step (2b): The positive electrode active material was mixed with the conductive carbon black (Super-P), carbon nanotubes (CNT), and a binder (PVDF) in an NMP solvent system according to a weight ratio of 96.7:1.3:0.2:1.8, fully stirred and mixed, and applied on the primary positive electrode plate obtained in step (4a), with coating weight controlled to be 5 mg/cm$^2$, followed by drying at 105°C, to obtain a positive electrode plate for later use.

Table 1 below gives in detail the differences between examples 1 to 30 and comparative examples 1 to 3. Table 2 gives electrochemical properties of examples 1 to 30 and comparative examples 1 to 3.

**Table 1**

| | Chemical formula | Molar proportion of nickel in metals other than Li (x) | Protruding portion height a (microns) | Base portion thickness d (microns) | a/(dx) | a/d | Gap b between protruding points (microns) | Number of protruding portions per square centimeter of the positive electrode active material layer (N) | First primary particle size (microns) | Second primary particle size (microns) | Secondary particle size (microns) | Ni content difference between primary particles and secondary particles (x1 – x2) | Doping element | Binder content ratio b2/b1 |
|---|---|---|---|---|---|---|---|---|---|---|---|---|---|---|
| Example 1 | LiNi$_{0.82}$Co$_{0.12}$Mn$_{0.06}$O$_2$ | 0.82 | 20 | 75 | 0.33 | 0.27 | 10 | 4 | / | 0.5 | 9.5 | / | / | / |
| Example 2 | LiNi$_{0.82}$Co$_{0.12}$Mn$_{0.06}$O$_2$ | 0.82 | 20 | 75 | 0.33 | 0.27 | 5 | 9 | / | 0.5 | 9.5 | / | / | / |
| Example 3 | LiNi$_{0.82}$Co$_{0.12}$Mn$_{0.06}$O$_2$ | 0.82 | 20 | 75 | 0.33 | 0.27 | 3 | 16 | / | 0.5 | 9.5 | / | / | / |
| Example 4 | LiNi$_{0.82}$Co$_{0.12}$Mn$_{0.06}$O$_2$ | 0.82 | 20 | 75 | 0.33 | 0.27 | 20 | 1 | / | 0.5 | 9.5 | / | / | / |
| Example 5 | LiNi$_{0.4}$Co$_{0.2}$Mn$_{0.4}$O$_2$ | 0.4 | 20 | 75 | 0.67 | 0.27 | 3 | 16 | 2.5 | / | / | / | / | / |
| Example 6 | LiNi$_{0.5}$Co$_{0.2}$Mn$_{0.3}$O$_2$ | 0.5 | 20 | 75 | 0.53 | 0.27 | 3 | 16 | 2.5 | / | / | / | / | / |
| Example 7 | LiNi$_{0.6}$Co$_{0.1}$Mn$_{0.3}$O$_2$ | 0.6 | 20 | 75 | 0.44 | 0.27 | 3 | 16 | 2.5 | / | / | / | / | / |
| Example 8 | LiNi$_{0.65}$Co$_{0.05}$Mn$_{0.3}$O$_2$ | 0.65 | 20 | 75 | 0.41 | 0.27 | 3 | 16 | 2.5 | / | / | / | / | / |
| Example 9 | LiNi$_{091}$Co$_{0.04}$Mn$_{0.05}$O$_2$ | 0.91 | 20 | 75 | 0.29 | 0.27 | 3 | 16 | / | 0.5 | 10.0 | / | / | / |
| Example 10 | LiNi$_{0.82}$Co$_{0.12}$Mn$_{0.06}$O$_2$ | 0.82 | 40 | 75 | 0.65 | 0.53 | 3 | 16 | / | 0.5 | 9.5 | / | / | / |
| Example 11 | LiNi$_{0.82}$Co$_{0.12}$Mn$_{0.06}$O$_2$ | 0.82 | 70 | 75 | 1.14 | 0.93 | 3 | 16 | / | 0.5 | 9.5 | / | / | |
| Example 12 | LiNi$_{0.82}$Co$_{0.12}$Mn$_{0.06}$O$_2$ | 0.82 | 5 | 30 | 0.20 | 0.17 | 3 | 16 | / | 0.5 | 9.5 | / | / | / |

| | Chemical formula | Molar proportion of nickel in metals other than Li (x) | Protruding portion height a (microns) | Base portion thickness d (microns) | a/(dx) | a/d | Gap b between protruding points (microns) | Number of protruding portions per square centimeter of the positive electrode active material layer (N) | First primary particle size (microns) | Second primary particle size (microns) | Secondary particle size (microns) | Ni content difference between primary particles and secondary particles (x1 – x2) | Doping element | Binder content ratio b2/b1 |
|---|---|---|---|---|---|---|---|---|---|---|---|---|---|---|
| Example 13 | $LiNi_{0.82}Co_{0.12}Mn_{0.06}O_2$ | 0.82 | 20 | 40 | 0.61 | 0.50 | 3 | 16 | / | 0.5 | 9.5 | / | / | / |
| Example 14 | $LiNi_{0.82}Co_{0.12}Mn_{0.06}O_2$ | 0.82 | 20 | 80 | 0.30 | 0.25 | 3 | 16 | / | 0.5 | 9.5 | / | / | / |
| Example 15 | $LiNi_{0.82}Co_{0.12}Mn_{0.06}O_2$ | 0.82 | 20 | 75 | 0.33 | 0.53 | 5 | 9 | / | 0.1 | 9.6 | / | / | / |
| Example 16 | $LiNi_{0.82}Co_{0.12}Mn_{0.06}O_2$ | 0.82 | 20 | 75 | 0.33 | 0.27 | 5 | 9 | / | 0.3 | 9.3 | / | / | / |
| Example 17 | $LiNi_{0.82}Co_{0.12}Mn_{0.06}O_2$ | 0.82 | 20 | 75 | 0.33 | 0.27 | 5 | 9 | 2.0 | 0.5 | 9.5 | / | / | / |
| Example 18 | $LiNi_{0.82}Co_{0.12}Mn_{0.06}O_2$ | 0.82 | 20 | 75 | 0.33 | 0.27 | 5 | 9 | / | 0.8 | 10 | / | / | / |
| Example 19 | $LiNi_{0.82}Co_{0.12}Mn_{0.06}O_2$ | 0.82 | 20 | 75 | 0.33 | 0.27 | 5 | 9 | / | 1.0 | 10.5 | / | / | / |
| Example 20 | 50% $LiNi_{0.82}Co_{0.12}Mn_{0.06}O_2$+ 50% $LiNi_{0.5}Co_{0.2}Mn_{0.3}O_2$ | 0.66 | 20 | 75 | 0.40 | 0.27 | 5 | 9 | 2.0 | 0.1 | 11.0 | 0.32 | / | / |
| Example 21 | 50% $LiNi_{0.82}Co_{0.12}Mn_{0.06}O_2$+ 50% $LiNi_{0.6}Co_{0.1}Mn_{0.3}O_2$ | 0.71 | 20 | 75 | 0.38 | 0.27 | 5 | 9 | 2.0 | 0.8 | 10.0 | 0.22 | / | / |

| | Chemical formula | Molar proportion of nickel in metals other than Li (x) | Protruding portion height a (microns) | Base portion thickness d (microns) | a/(dx) | a/d | Gap b between protruding points (microns) | Number of protruding portions per square centimeter of the positive electrode active material layer (N) | First primary particle size (microns) | Second primary particle size (microns) | Secondary particle size (microns) | Ni content difference between primary particles and secondary particles (x1 – x2) | Doping element | Binder content ratio b2/b1 |
|---|---|---|---|---|---|---|---|---|---|---|---|---|---|---|
| Example 22 | 50% $LiNi_{0.92}Co_{0.04}Mn_{0.04}O_2$+ 50% $LiNi_{0.9}Co_{0.05}Mn_{0.05}O_2$ | 0.91 | 20 | 75 | 0.29 | 0.27 | 5 | 9 | 2.0 | 0.5 | 9.0 | 0.02 | / | / |
| Example 23 | $LiNi_{0.82}Co_{0.115}Mn_{0.06}Al_{0.005}O_2$ | 0.82 | 20 | 75 | 0.33 | 0.27 | 5 | 9 | / | 0.4 | 9.5 | / | Al 0.5% | / |
| Example 24 | $LiNi_{0.82}Co_{0.115}Mn_{0.06}Sr_{0.005}O_2$ | 0.82 | 20 | 75 | 0.33 | 0.27 | 5 | 9 | / | 0.8 | 10.0 | / | Sr 0.5% | / |
| Example 25 | $LiNi_{0.82}Co_{0.115}Mn_{0.06}W_{0.005}O_2$ | 0.82 | 20 | 75 | 0.33 | 0.27 | 5 | 9 | / | 0.4 | 9.6 | / | W 0.5% | / |
| Example 26 | $LiNi_{0.82}Co_{0.115}Mn_{0.06}Zr_{0.005}O_2$ | 0.82 | 20 | 75 | 0.33 | 0.27 | 5 | 9 | / | 0.7 | 9.9 | / | Zr 0.5% | / |
| Example 27 | $LiNi_{0.82}Co_{0.115}Mn_{0.06}Zr_{0.005}O_2$ | 0.82 | 20 | 75 | 0.33 | 0.27 | 5 | 9 | / | 0.4 | 9.8 | / | Zr 0.5% | / |
| Example 28 | $LiNi_{0.82}Co_{0.12}Mn_{0.06}O_2$ | 0.82 | 20 | 75 | 0.33 | 0.27 | 5 | 9 | / | 0.5 | 9.5 | / | / | 1.2 |
| Example 29 | $LiNi_{0.82}Co_{0.12}Mn_{0.06}O_2$ | 0.82 | 20 | 75 | 0.33 | 0.27 | 5 | 9 | / | 0.5 | 9.5 | / | / | 1.5 |
| Example 30 | $LiNi_{0.82}Co_{0.12}Mn_{0.06}O_2$ | 0.82 | 20 | 75 | 0.33 | 0.27 | 5 | 9 | / | 0.5 | 9.5 | / | / | 2 |

| | Chemical formula | Molar proportion of nickel in metals other than Li (x) | Protruding portion height a (microns) | Base portion thickness d (microns) | a/(dx) | a/d | Gap b between protruding points (microns) | Number of protruding portions per square centimeter of the positive electrode active material layer (N) | First primary particle size (microns) | Second primary particle size (microns) | Secondary particle size (microns) | Ni content difference between primary particles and secondary particles (x1 – x2) | Doping element | Binder content ratio b2/b1 |
|---|---|---|---|---|---|---|---|---|---|---|---|---|---|---|
| Comparative example 1 | $LiNi_{0.5}Co_{0.2}Mn_{0.3}O_2$ | 0.5 | None | 75 | | / | / | / | 2.5 | / | / | / | / | / |
| Comparative example 2 | $LiNi_{0.5}Co_{0.2}Mn_{0.3}O_2$ | 0.5 | 2 | 76 | 0.05 | 0.03 | 3 | 16 | 2.5 | / | / | / | / | / |
| Comparative example 3 | $LiNi_{0.5}Co_{0.2}Mn_{0.3}O_2$ | 0.5 | 50 | 76 | 1.32 | 0.66 | 3 | 16 | 2.5 | / | / | / | / | / |

**Table 2:**

| | Lithium precipitation degree after 10 cycles of charge and discharge at 0°C and 0.5C | Lithium precipitation at the corners after 500 cycles at 25°C/1C? | 10C discharge retention rate | Cycles where 45°C/10C cycling capacity reaches 80% |
|---|---|---|---|---|
| Example 1 | None | No | 97.8% | 1230 |
| Example 2 | None | No | 98.2% | 1300 |
| Example 3 | None | No | 98.5% | 1390 |
| Example 4 | Slight spotted lithium precipitation | No | 97.5% | 1000 |
| Example 5 | None | No | 94.5% | 890 |
| Example 6 | None | No | 95.0% | 1010 |
| Example 7 | None | No | 95.8% | 1180 |
| Example 8 | None | No | 96.9% | 1400 |
| Example 9 | None | No | 98.6% | 780 |
| Example 10 | None | No | 96.1% | 1100 |
| Example 11 | None | No | 95.0% | 900 |
| Example 12 | None | No | 98.6% | 1350 |
| Example 13 | None | No | 97.5% | 1380 |
| Example 14 | None | No | 96.5% | 1280 |
| Example 15 | None | No | 96.5% | 910 |
| Example 16 | None | No | 96.0% | 1280 |
| Example 17 | None | No | 94.3% | 1320 |
| Example 18 | None | No | 91.0% | 1290 |
| Example 19 | None | No | 88.0% | 1020 |
| Example 20 | None | No | 90.0% | 1420 |
| Example 21 | None | No | 96.1% | 1500 |
| Example 22 | None | No | 96.5% | 920 |
| Example 23 | None | No | 92.0% | 1380 |
| Example 24 | None | No | 95.6% | 1360 |

(continued)

| | Lithium precipitation degree after 10 cycles of charge and discharge at 0°C and 0.5C | Lithium precipitation at the corners after 500 cycles at 25°C/1C? | 10C discharge retention rate | Cycles where 45°C/10C cycling capacity reaches 80% |
|---|---|---|---|---|
| Example 25 | None | No | 97.0% | 1390 |
| Example 26 | None | No | 95.9% | 1350 |
| Example 27 | None | No | 93.8% | 1360 |
| Example 28 | None | No | 95.8% | 1390 |
| Example 29 | None | No | 96.5% | 1410 |
| Example 30 | None | No | 97.0% | 1340 |
| Comparative example 1 | Lithium precipitation at corners | Yes | 96.5% | 300 |
| Comparative example 2 | Lithium precipitation at corners | Yes | 96.5% | 325 |
| Comparative example 3 | Lithium precipitation on entire surface | Yes | 78.0% | 100 |

**Test method**

**Lithium precipitation degree after 10 cycles of charge and discharge at 0°C and 0.5C:** The battery under test was placed at a test temperature of 0°C for 30 minutes and charged to a full charge cut-off voltage at a constant current of 0.5C (when the Ni content was $x \geq 0.8$, the full charge cut-off voltage was 4.25 V, and otherwise, the full charge cut-off voltage was 4.35 V). Then, the battery was charged to 0.05C at the full charge cut-off voltage, till the battery reached the fully charged state. Then the battery was left to rest for 5 minutes and discharged at a constant current of 0.5C to 3.0 V, and left to rest for another 5 minutes. This charging and discharging process was repeated for 10 times. During the 10th cycle, the battery was charged to a fully charged state and dissembled, and the negative electrode plate was taken out and observed to determine the lithium precipitation degree of the negative electrode plate.

**Test of lithium precipitation at corners after 500 cycles of charge and discharge at 25°C and 1C:** The battery under test was placed at 25°C for 30 minutes and charged to a full charge cut-off voltage at a constant current of 1C (when the Ni content was $x \geq 0.8$, the full charge cut-off voltage was 4.25 V, and otherwise, the full charge cut-off voltage was 4.35 V). Then, the battery was charged to 0.05C at the full charge cut-off voltage till the battery reached the fully charged state. Then the battery was left to rest for 5 minutes, discharged at a constant current of 1C to 3.0 V, and left to rest for another 5 minutes. This charging and discharging process was repeated for 500 times. During the 500th cycle, the battery was charged to a fully charged state and dissembled, and the negative electrode plate was taken out and observed to determine the lithium precipitation situation at corners of the negative electrode plate.

**Rate performance (10C/0.2C) test**

In an environment of $(25\pm3)$°C, the battery was charged at a constant current of 0.5C to the full charge cut-off voltage (when the Ni content was $x \geq 0.8$, the full cut-off voltage was 4.25 V, and otherwise, the full charge cut-off voltage was 4.35 V), charged with the constant full charge cut-off voltage to the cut-off current of 0.05C, and then discharged at constant currents of 0.2C and 10C to 3.0 V, and the discharge capacities under 0.2C and 10C were obtained, where the rate performance = 10C discharge capacity/0.2C discharge capacity $\times$ 100%.

**Cycles where 45°C/10C cycling capacity reaches 80%:**

The battery under test was placed at 45°C for 30 minutes, and charged to a full charge cut-off voltage at a constant current of 10C (when the Ni content was $x \geq 0.8$, the full charge cut-off voltage was 4.25 V, and otherwise, the full charge cut-off voltage is 4.35 V). Then, the battery was charged to 0.05C at the full charge cut-off voltage, and left to rest for 5 minutes, then discharged at a constant current of 10C to 3.0V, a discharge capacity C1 was recorded, and the battery was left to rest another 5 minutes. This charging and discharging process was repeated until the discharge capacity was 80% C1, and the number of cycles at that point was recorded.

**Average particle size of particles:** A scanning electron microscope was used to take photos of a cross section of the positive electrode plate of the battery under test, 50 first primary particles were randomly selected and their longest diameters were measured, and an average value thereof was taken as the average particle size of the first primary particles. 50 secondary particles were randomly selected and their longest diameters were measured, and an average value thereof was taken as the average particle size of the secondary particles. 50 second primary particles in secondary particles were randomly selected and their longest diameters were measured, and an average value thereof was taken as the average particle size of the second primary particles.

**Test of elements and contents thereof:** A mixed solvent was used to dissolve the positive electrode active material of the battery under test (for example, 0.4 g of positive electrode active material dissolved in a mixed solvent of 10 ml aqua regia (nitric acid and hydrochloric acid mixed at a ratio of 1:1) and 2 ml HF), diluted to 100 mL, and then ICP-OES (Inductively Coupled Plasma-Optical Emission Spectrometer, equipment model: ICAP6300) was used to test and determine contents of element Ni, element Co, element Mn, and element M in the positive electrode active material. The element contents of the primary particles and the secondary particles in the positive electrode active material were tested using SEM-EDS.

**Test of binder content:** Samples of upper and lower layers of the positive electrode active material layer of the battery under test were taken, and the respective binder contents of the upper and lower layers in the positive electrode active material layer were obtained by thermogravimetric analysis.

**Test of base portion thickness d and protruding portion height a of the positive electrode active layer:** The positive electrode plate of the battery under test was treated with a slicer to obtain a cross section perpendicular to the surface of the positive electrode current collector, and a scanning electron microscope was used to randomly select 20 places on the surface of the base portion and measure their thicknesses, and an average value was taken as the base portion thickness d; and 20 protruding portions were randomly selected, and the heights from their apexes to the current collector were measured, where the average value thereof was H. The protruding portion height was a = H - d.

**See the foregoing Table 1 and Table 2:**

The positive electrode active material layers of examples 1 to 30 all contain a base portion and a protruding portion, where the thickness d microns of the base portion, the height a microns of the protruding portion, and the molar proportion x of nickel in the lithium-nickel composite oxide in metal elements other than lithium in the lithium-nickel composite oxide, satisfy the relation of $0.2d \times x \le a \le 1.15d \times x$, and the positive electrode active material layer of comparative example 1 contains no protruding portion, where $a < 0.2dx$ in comparative example 2, and $a > 1.15dx$ in comparative example 3. According to the electrochemical performance data in Table 2, compared with comparative examples 1 to 3, the electrochemical performance of examples 1 to 30 (lithium precipitation degree after 10 cycles of charge and discharge at 0°C and 0.5C, lithium precipitation degree at corners after 500 cycles at 25°C/1C, 10C discharge retention rate, and the number of cycles at 45°C/10C to 80% of the initial capacity) are significantly improved. This is mainly because the C-axis of the lithium-nickel composite oxide swells first and then shrinks during the charging and discharging process, and a higher nickel content in the lithium-nickel composite oxide leads to greater swelling of the C-axis in the charging and discharging process, causing the positive electrode plate to first swell and then shrink, and presenting a different interface stress change with the negative electrode plate. This change causes irregular interface changing between the winding layers in the wound-structure battery cell. Such irregular interface changing is more obvious in non-planar zones (for example, winding corners). The resulting uneven interfacial tension leads to wavy deformation in the battery cell, affecting its appearance, safety, and customer use. This application employs the foregoing design, that is, the protruding portions being constructed on the base portion of the positive electrode active material layer of the positive electrode plate, allowing for reservation of a gap for the swelling of the electrode plate, providing a stress release space, thereby alleviating this issue. According to research, when the height a microns of the protruding portion, the thickness d microns of the base portion, and the molar proportion x of element nickel in the lithium-nickel composite oxide in metal elements other than lithium in the lithium-nickel composite oxide, satisfy a relation of $0.2d \times x \le a \le 1.15d \times x$, a lithium-ion battery prepared can not only support high-rate discharge, but also have a longer high-temperature cycle life and safety performance across the lifespan.

Further, it can be seen from the comparison between example 11 and other examples that when $0.2d \times x \le a \le 0.7d \times x$, the lithium-ion battery has improved rate performance and better high-temperature cycle life. This is because when $a > 0.7d \times x$, impedance of the lithium-ion battery increases, thus reducing its rate performance and high-temperature cycle life.

It can be understood from comparison between example 4 and other examples that when the number N of protruding portions per square centimeter of the positive electrode active material layer satisfies $N \ge 4$, the low-temperature discharge performance and high-temperature cycle life of the lithium-ion battery can be further improved, because when the number N of protruding portions satisfies $N \ge 4$, the protruding portions can provide effective support and reserve enough space for swelling, thus improving the low-temperature discharge performance and high-temperature cycle life of the lithium-ion battery.

In this application, the positive electrode active material in examples 17 and 20 to 22 includes first primary particles and secondary particles formed by aggregation of second primary particles, where a molar proportion of element nickel in the first primary particles in metals other than lithium in the first primary particles is x1, and a molar proportion of element nickel in the secondary particles in metals other than lithium in the secondary particles is x2. Refer to examples 20 to 22 in Table 2, where $0.02 \leq x1 - x2 \leq 0.35$. A higher Ni content leads to more Li ions deintercalated under the same voltage and more obvious change of the C-axis. For example, extreme shrinkage value of the C-axis is above 5% when the Ni content is greater than 80, and is reduced to 3% when the Ni content is less than or equal to 60. Therefore, setting the Ni content of the secondary particles with a larger particle size to be lower than that of the first primary particles with a smaller particle size can effectively alleviate uneven electrode plate swelling. In the another perspective, particle fragmentation can be effectively prevented by blending up the primary particles and secondary particles. Therefore, in this application, different particle morphologies are set and different Ni contents are set for particles with different morphologies, that is, appropriately reducing the Ni content in secondary particles with a large particle size and increasing the Ni content in primary particles with a small particle size, which balances the deintercalation speed and distribution of Li ions, further alleviating electrode plate swelling, and improving a high-temperature cycle life of the electrochemical device.

In examples 23 to 27, the doping elements are discussed. Lithium-nickel composite oxides demonstrate high temperature rise during a high-rate application process. Doping can improve the interface stability at high temperature and improve cycling performance. In another perspective, doping can increase interface impedance during fast charging, slowing down lithium precipitation at the positive electrode plane and corners, and improving safety performance at the final stage of the lifespan. When the doping element is selected from at least one of Al, Nb, Mg, Ti, W, Ga, Zr, W, Y, V, Sr, Mo, Ru, Ag, Sn, Au, La, Ce, Pr, Nd, Sm, or Gd, and a molar proportion a1 of the doping element in the lithium-nickel composite oxide in metal elements other than lithium in the lithium-nickel composite oxide, satisfies $0.1\% \leq a1 \leq 2\%$, a relatively good high-temperature cycle life is obtained.

In examples 28 to 30, the binder in the positive electrode active layer is discussed. In these examples, the positive electrode active material layer includes a first layer and a second layer, where the first layer is located between the positive electrode current collector and the second layer, where based on a mass of the first layer, a mass percentage of the binder in the first layer is b1, and based on a mass of the second layer, a mass percentage of the binder in the second layer is b2, satisfying $b2 \, b1 \geq 1.2$. According to the application, the binder contents in the first layer and the second layer of the positive electrode active material layer are changed, so that there is more binder in the second layer away from the current collector, which is more conducive to restraining thickness change of the electrode plate, thereby improving the high-temperature cycle life of the lithium-ion battery.

Although illustrative embodiments have been demonstrated and described, it should be understood by persons skilled in the art that the foregoing embodiments cannot be interpreted as limitations to this application, and changes, substitutions and modifications can be made to the embodiments without departing from the spirit, principles and scope of this application.

**Claims**

1. An electrochemical device, comprising a positive electrode, wherein the positive electrode comprises a positive electrode current collector and a positive electrode active material layer disposed on a surface of the positive electrode current collector, wherein

   the positive electrode active material layer comprises a base portion and a protruding portion on a surface of the base portion away from the current collector, wherein a thickness of the base portion is d microns, and a height of the protruding portion is a microns; and
   the positive electrode active material layer comprises a positive electrode active material, and the positive electrode active material comprises a lithium-nickel composite oxide, wherein a molar proportion of element nickel in the lithium-nickel composite oxide in metal elements other than lithium in the lithium-nickel composite oxide is x, satisfying: $0.2d \times x \leq a \leq 1.15d \times x$.

2. The electrochemical device according to claim 1, wherein $0.2d \times x \leq a \leq 0.7d \times x$.

3. The electrochemical device according to claim 1, wherein the positive electrode active material layer has N protruding portions per square centimeter, wherein N is 1 to 25, preferably 4 to 25.

4. The electrochemical device according to claim 1, wherein the electrochemical device satisfies at least one of the following conditions:

$$(1)\ 5 \leq a \leq 70;$$

$$(2)\ 30 \leq d \leq 100;$$

$$(3)\ 0.4 \leq x \leq 0.95;$$

or

$$(4)\ a \leq 0.95d.$$

5. The electrochemical device according to claim 4, wherein the electrochemical device satisfies at least one of the following conditions:

$$(1)\ 5 \leq a \leq 40;$$

or

$$(2)\ 0.15d \leq a \leq 0.55d.$$

6. The electrochemical device according to claim 1, wherein the positive electrode active material comprises first primary particles and secondary particles formed by aggregation of second primary particles, wherein a molar proportion of element nickel in the first primary particles in metal elements other than lithium in the first primary particles is x1, and a molar proportion of element nickel in the secondary particles in metal elements other than lithium in the secondary particles is x2, satisfying: $0.02 \leq x1 - x2 \leq 0.35$.

7. The electrochemical device according to claim 6, wherein the electrochemical device satisfies at least one of the following conditions:

    (a) an average particle size of the first primary particles is 1 micron to 6 microns;
    (b) an average particle size of the second primary particles is 100 nanometers to 2 microns; or
    (c) an average particle size of the secondary particles is 8 microns to 15 microns.

8. The electrochemical device according to claim 1, wherein the electrochemical device satisfies at least one of the following conditions:

    (1) the lithium-nickel composite oxide further comprises element Co, and a molar proportion of element Co in the lithium-nickel composite oxide in metal elements other than lithium in the lithium-nickel composite oxide is y, wherein $0.01 \leq y \leq 0.5$;
    (2) the lithium-nickel composite oxide further comprises element Mn, and a molar proportion of element Mn in the lithium-nickel composite oxide in metal elements other than lithium in the lithium-nickel composite oxide is z, wherein $0.01 \leq z \leq 0.5$;
    (3) the lithium-nickel composite oxide further comprises element M, wherein element M comprises at least one of Al, Nb, Mg, Ti, W, Ga, Zr, W, Y, V, Sr, Mo, Ru, Ag, Sn, Au, La, Ce, Pr, Nd, Sm, or Gd, and a molar proportion of element M in the lithium-nickel composite oxide in metal elements other than lithium in the lithium-nickel composite oxide is a1, wherein $0.1\% \leq a1 \leq 2\%$; or
    (4) the lithium-nickel composite oxide comprises $Li_mNi_xCo_yMn_zM_{a1}O_{2\pm q}T_q$, wherein M comprises at least one of Al, Nb, Mg, Ti, W, Ga, Zr, W, Y, V, Sr, Mo, Ru, Ag, Sn, Au, La, Ce, Pr, Nd, Sm, or Gd, and T comprises at least one of F, Cl, Br, I, N or S, wherein $0.2 \leq m \leq 1.2$, $0.4 \leq x \leq 0.95$, $0 \leq y \leq 0.5$, $0 \leq z \leq 0.5$, $0 \leq a1 \leq 0.02$, and $0 \leq q \leq 0.2$.

9. The electrochemical device according to claim 1, wherein the positive electrode active material layer comprises a first layer and a second layer, wherein the first layer is located between the positive electrode current collector and the second layer, wherein based on a mass of the first layer, a mass percentage of a binder in the first layer is b1, and based on a mass of the second layer, a mass percentage of a binder in the second layer is b2, satisfying: $b2/b1 \geq 1.2$.

**10.** An electronic device, comprising the electrochemical device according to any one of claims 1 to 9.

FIG. 1A

FIG. 1B

Protruding portion height a

Base portion thickness d

Current collector

FIG. 2

## INTERNATIONAL SEARCH REPORT

| | International application No. |
|---|---|
| | **PCT/CN2022/104074** |

### A. CLASSIFICATION OF SUBJECT MATTER

H01M 4/13(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 正极, 活性, 层, 凸起, 突起, 凸点, 镍酸锂, 镍钴锰, 三元, 镍, 含量, 高度, 膨胀, battery, cathode, active, layer, protru+, bump, LiNiO2, NCM, nickel, content, height, expan+

### C. DOCUMENTS CONSIDERED TO BE RELEVANT

| Category* | Citation of document, with indication, where appropriate, of the relevant passages | Relevant to claim No. |
|---|---|---|
| X | CN 107437623 A (NINGDE CONTEMPORARY AMPEREX TECHNOLOGY CO., LTD.) 05 December 2017 (2017-12-05) description, paragraphs 5-28 and 35-59, and figures 1-2 | 1-5, 8, 10 |
| Y | CN 107437623 A (NINGDE CONTEMPORARY AMPEREX TECHNOLOGY CO., LTD.) 05 December 2017 (2017-12-05) description, paragraphs 5-28 and 35-59, and figures 1-2 | 9 |
| Y | CN 111613770 A (CITIC GUOAN MENGGULI POWER SOURCE TECHNOLOGY CO., LTD.) 01 September 2020 (2020-09-01) description, paragraphs 3-25 and 58 | 9 |
| A | CN 111640912 A (LISHEN POWER BATTERY SYSTEMS CO., LTD.) 08 September 2020 (2020-09-08) entire document | 1-10 |
| A | CN 202633449 U (NINGDE AMPEREX TECHNOLOGY LTD. et al.) 26 December 2012 (2012-12-26) entire document | 1-10 |

☑ Further documents are listed in the continuation of Box C. ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **07 December 2022** | **27 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/104074**

| C. | DOCUMENTS CONSIDERED TO BE RELEVANT | |
|---|---|---|
| Category* | Citation of document, with indication, where appropriate, of the relevant passages | Relevant to claim No. |
| A | CN 103367702 A (DONGGUAN AMPEREX TECHNOLOGY LTD.) 23 October 2013 (2013-10-23)<br>    entire document | 1-10 |
| A | JP 2013062105 A (HITACHI LTD.) 04 April 2013 (2013-04-04)<br>    entire document | 1-10 |

Form PCT/ISA/210 (second sheet) (January 2015)

**INTERNATIONAL SEARCH REPORT**
Information on patent family members

International application No.

**PCT/CN2022/104074**

| Patent document cited in search report | | | Publication date (day/month/year) | Patent family member(s) | Publication date (day/month/year) |
|---|---|---|---|---|---|
| CN | 107437623 | A | 05 December 2017 | None | |
| CN | 111613770 | A | 01 September 2020 | None | |
| CN | 111640912 | A | 08 September 2020 | None | |
| CN | 202633449 | U | 26 December 2012 | None | |
| CN | 103367702 | A | 23 October 2013 | None | |
| JP | 2013062105 | A | 04 April 2013 | None | |

Form PCT/ISA/210 (patent family annex) (January 2015)